# EUROPEAN PATENT SPECIFICATION

(11) **EP 1 522 432 B1**
(45) Date of publication and mention of the grant of the patent: **20.02.2008**
(21) Application number: 04022418.0
(22) Date of filing: 21.09.2004
(51) Int. Cl.: B60G 21/055, B62D 21/11

(54) **Suspension**
Radaufhängung
Suspension de roue

(30) Priority: 09.10.2003 JP 2003350385
(43) Date of publication of application: 13.04.2005
(73) Proprietor: Toyota Jidosha Kabushiki Kaisha, Toyota-shi, Aichi 471-8571 (JP)
(72) Inventor: Ogura, Noboru, Toyota-shi, Aichi-ken, 471-8571 (JP)
(74) Representative: TBK-Patent

(56) References cited:
- EP-A- 0 477 654
- US-A- 5 707 074
- PATENT ABSTRACTS OF JAPAN vol. 2000, no. 23, 10 February 2001 (2001-02-10) -& JP 2001 171326 A (NISSAN MOTOR CO LTD), 26 June 2001 (2001-06-26)
- PATENT ABSTRACTS OF JAPAN vol. 2000, no. 06, 22 September 2000 (2000-09-22) -& JP 2000 071734 A (MAZDA MOTOR CORP), 7 March 2000 (2000-03-07)
- PATENT ABSTRACTS OF JAPAN vol. 1998, no. 14, 31 December 1998 (1998-12-31) & JP 10 258763 A (NISSAN MOTOR CO LTD), 29 September 1998 (1998-09-29)

## Description

### BACKGROUND OF THE INVENTION

### Field of the Invention

The present invention relates to a suspension including a stabilizer bar and two lower arms.

### Discussion of Related Art.

JP 2001 171 326 A discloses a suspension including a stabilizer bar and a lower arm, wherein a space is provided between the lower arm and a portion of a body-side member, and the lower arm and the stabilizer bar are attached such that a portion of the stabilizer bar is accommodated by the space. In addition, JP8-318722 A and JP9-123722 A each disclose a lower arm having a recess opening upward.

### SUMMARY OF THE INVENTION

It is an object of the present invention to provide an improved suspension, e.g., a suspension which can be provided in a reduced space, without lowering a rolling-restraining effect of a stabilizer bar thereof.

According to the present invention, there is provided a suspension for use with a vehicle having a first pair of front left wheel and front right wheel and a second pair of rear left wheel and rear right wheel, the suspension including a left lower arm and a right lower arm corresponding to the left wheel and the right wheel of at least one pair of the first and second pairs, respectively; and a stabilizer bar which is provided between the left wheel and the right wheel, the left lower arm, the right lower arm, and the stabilizer bar being provided such that at least when the suspension fully rebounds, at least a portion of a first cross section of each of opposite wheel-side portions of the stabilizer bar that are located on respective sides of the left wheel and the right wheel is positioned below a straight line connecting between respective upper ends of two portions of a second cross section of a corresponding one of the left lower arm and the right lower arm, the first and second cross sections being taken along a plane perpendicular to an axis line of the each wheel-side portion of the stabilizer bar, the two portions of the second cross section being located on either side of at least the portion of the first cross section.

The stabilizer bar has, in its plan view, a generally U-shaped configuration, and is provided between a right wheel and a left wheel of a vehicle. The stabilizer bar includes an intermediate portion extending in a direction substantially parallel to a widthwise direction of the vehicle, and a left arm (or wheel-side) portion and a right arm (or wheel-side) portion which are located on either side of the intermediate portion and each of which extends in a direction having a component parallel to a lengthwise direction of the vehicle. Therefore, an axis line of the stabilizer bar extends, in the intermediate portion of the bar, in the direction substantially parallel to the widthwise direction of the vehicle, and extends, in each of the left and right arm portions of the bar, in the direction having the component parallel to the lengthwise direction of the vehicle. Respective free ends of the left and right arm portions of the stabilizer bar are supported by two wheel-side members, such as the two lower arms, or two shock absorbers, that are related to the left and right wheels of the vehicle, respectively, such that the left and right arm portions are pivotable or swingable, but are not upwardly or downwardly movable, relative to the two wheel-side members, respectively. The intermediate portion of the stabilizer bar is supported by a body-side member such that the intermediate portion is not upwardly or downwardly movable relative to the body-side member. The left and right arm portions of the stabilizer bar extend above the two lower arms, respectively.

The stabilizer bar may be provided such that when an arbitrary one of the two wheel-side members fully rebounds relative to the body-side member, a portion of the first cross section of the stabilizer bar is positioned below the straight line passing through the respective upper ends of the two side portions of the second cross section of a corresponding one of the two lower arms that are located on either side of the bar, or such that when the arbitrary wheel-side member fully rebounds relative to the body-side member, an entirety of the first cross section of the stabilizer bar is positioned below the straight line.

The stabilizer bar may be provided such that not only when an arbitrary one of the two wheel-side members fully rebounds, but also when the arbitrary wheel-side member is in a normal or neutral state, a portion of the first cross section of the stabilizer bar is positioned below the straight line. The normal or neutral state means, e.g., a state in which the arbitrary wheel-side member takes a reference height position relative to the body-side member, or a state in which the vehicle carries a standard load and is stopped, or is straightly running, on a horizontal road surface. In each case, the stabilizer bar is provided such that even when the arbitrary wheel-side member fully rebounds, the stabilizer bar is not interfered with by the corresponding lower arm. Thus, the twisting of the stabilizer bar that is caused by the rolling of the vehicle is not limited by the lower arms.

The lower arms may be either of so-called "A" type or of so-called "L" type. Each lower arm has a generally flat shape, and may be produced by press working of a metal sheet.

The suspension may be of strut type (i.e., Mcfarson strut type) or of double Wishborn type.

The suspension in accordance with the present invention can be provided in a reduced space, without lowering a rolling-restraining effect of the stabilizer bar thereof.

According to a preferred feature of the present invention, each of the left lower arm and the right lower arm has a recess opening upward, and at least when the suspension fully rebounds, at least the portion of the first cross section of the each wheel-side portion of the stabilizer bar is positioned in the recess of the corresponding one lower arm. According to another preferred feature of the present invention, each of the left lower arm and the right lower arm has a through-hole formed through a thickness thereof and opening upward and downward, and at least when the suspension fully rebounds, at least the portion of the first cross section of the each wheel-side portion of the stabilizer bar is positioned in the through-hole of the corresponding one lower arm.

Each of the two lower arms may have a recess or a through-hole that is formed to have a required strength or a decreased weight. In this case, the recess or the through-hole may be utilized to accommodate a portion of the stabilizer bar. Alternatively, each lower arm may have a recess or a through-hole that is exclusively used to accommodate a portion of the stabilizer bar. In either case, each lower arm has the recess or the through-hole, in at least a portion thereof specified by a positional relationship between the each lower arm and the stabilizer bar.

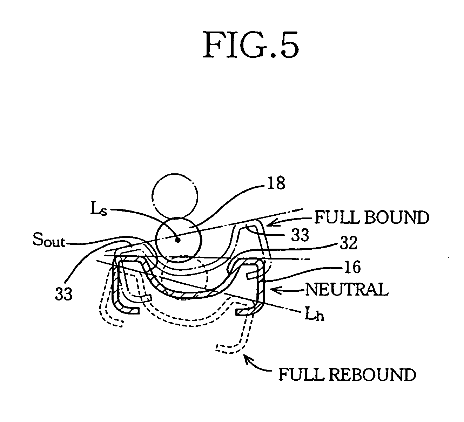

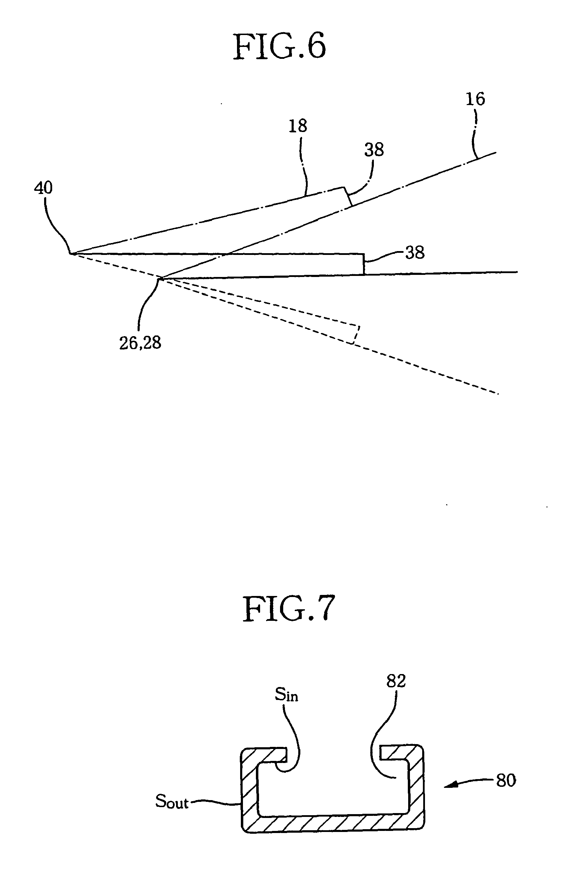

As far as the present specification is concerned, the term "recess" means a vacant space which opens upward but does not open downward, that is, does not extend through a thickness of each lower arm but has a bottom wall constituted by the material of the each lower arm. When each lower arm is produced by press working of a metal sheet, the metal sheet may be inwardly curved, as shown in Fig. 5, so that the recess of the lower arm is defined by an outer surface of the lower arm, or alternatively the metal sheet may be outwardly curved, as shown in Fig. 7, so that the recess of the lower arm is defined by an inner surface of the lower arm.

### BRIEF DESCRIPTION OF THE DRAWINGS

The above and optional objects, features, and advantages of the present invention will be better understood by reading the following detailed description of the preferred embodiments of the invention when considered in conjunction with the accompanying drawings, in which:
Fig. 1 is an elevation view of a suspension as a first embodiment of the present invention;
Fig. 2 is a plan view of the suspension;
Fig. 3 is a perspective view of a pertinent portion of the suspension;
Fig. 4 is another perspective view of the pertinent portion of the suspension;
Fig. 5 is a cross-sectional view taken along A - A in Fig. 2, for explaining a manner in which the suspension operates;
Fig. 6 is an illustrative view for explaining a relative position of a stabilizer bar and a lower arm of the suspension;
Fig. 7 is a cross-sectional view corresponding to Fig. 5, showing a lower arm of another suspension as a second embodiment of the present invention;
Fig. 8A is a perspective view of a lower arm of another suspension as a third embodiment of the present invention; and
Fig. 8B is a cross-sectional view corresponding to Fig. 5, showing the lower arm of Fig. 8A.

### DETAILED DESCRIPTION OF THE PREFERRED EMBODIMENTS

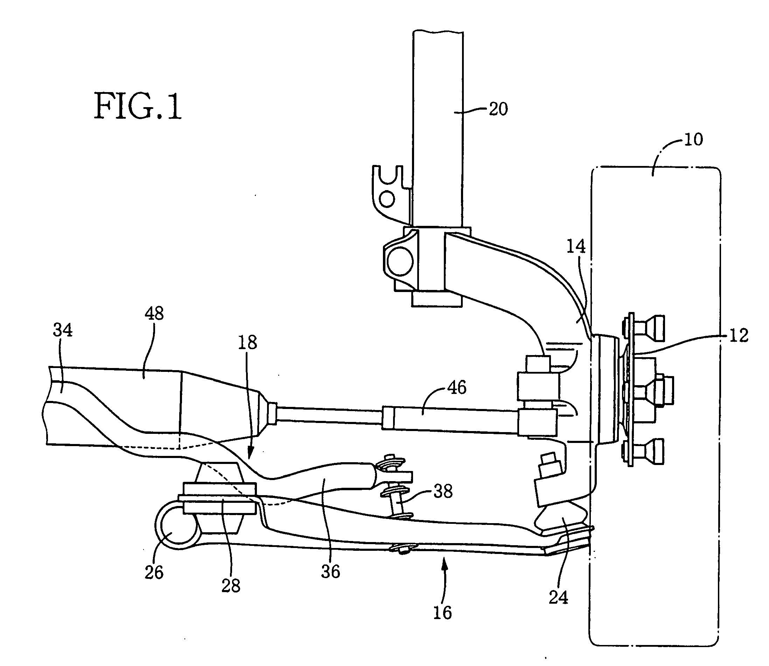

Hereinafter, there will be described in detail, by reference to the drawings, a suspension of an automotive vehicle to which the present invention is applied. The present suspension is a Mcfarson strut type suspension. As shown in Fig. 1, two steering wheels 10 (only one steering wheel 10 is shown in the figures) as two front wheels out of four wheels of the vehicle are fixed, with bolts, to two axle hubs 12 (only one axle hub 12 is shown in the figures), respectively, and two steering knuckles 14 (only one steering knuckle 14 is shown in the figures) are attached to the two axle hubs 12, respectively, such that the steering knuckles 14 are rotatable relative to the corresponding axle hubs 12. The present suspension includes two lower arms 16 (only one lower arm 16 is shown in the figures), a stabilizer bar 18, and two shock absorbers 20 (only one shock absorber 20 is shown in the figures).

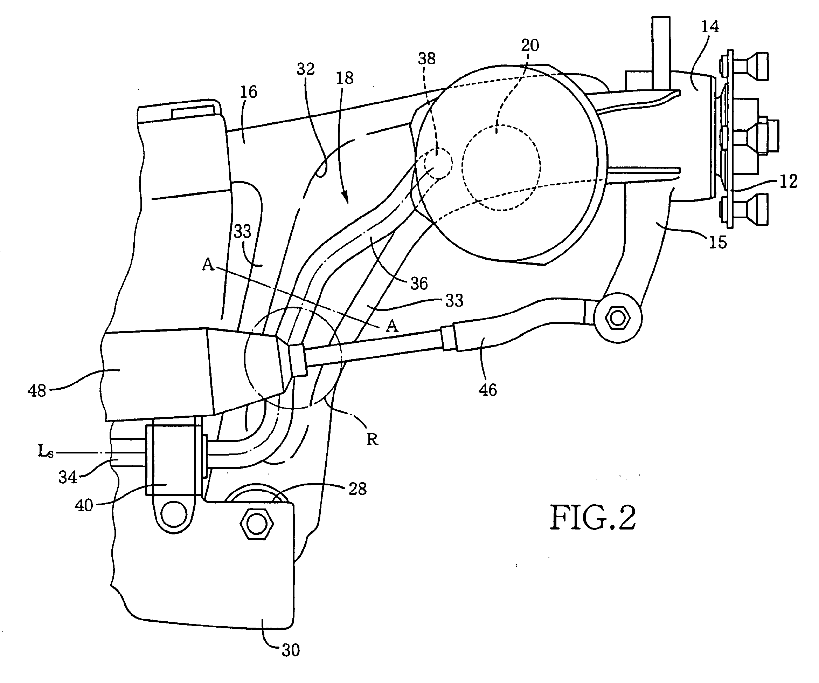

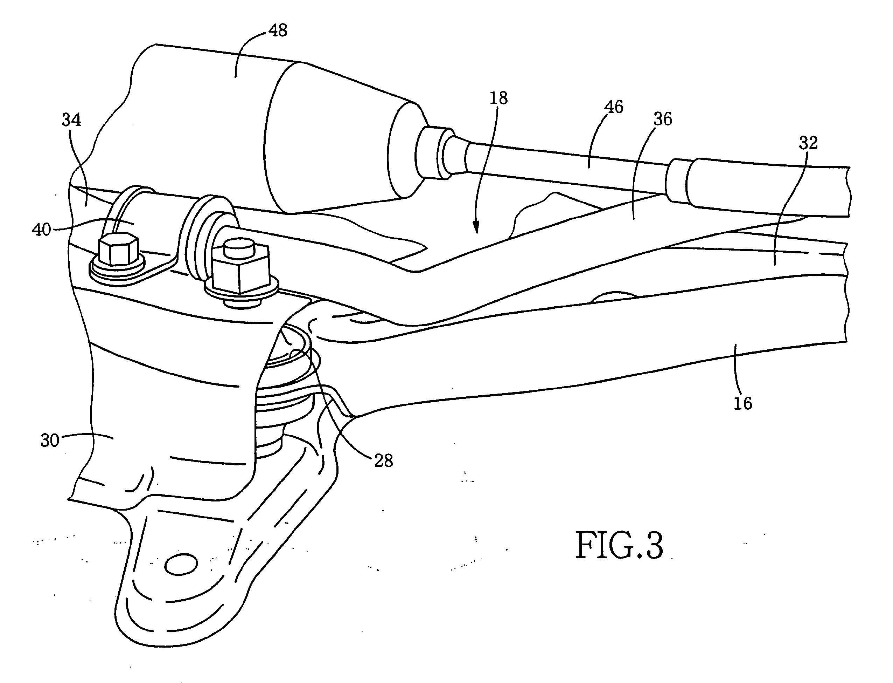

Each lower arm 16 is of so-called "L" type, and is produced by press working of a sheet metal. This lower arm 16 is lighter than a lower arm produced by forging. Each lower arm 16 is attached, at one of opposite end portions thereof, to a lower end portion of the corresponding steering knuckle 14 via a ball joint 24, such that the lower arm 16 is rollable relative to the steering knuckle 14. The other end portion of the lower arm 16 includes two connection portions 26, 28 each of which includes a rubber bushing and is connected to a body-side member 30, shown in Fig. 2, such that the lower arm 16 is pivotable relative to the body-side member 30. As shown in Figs. 2 and 3, the lower arm 16 has a recess 32 that opens in an upper surface thereof and is located in a central portion thereof. The recess 32 extends over a generally entire area of the upper surface of the lower arm 16. As shown in Fig. 5, the recess 32 opens upward, and a shear center of the lower arm 16 is located in the vicinity of a plane passing through an upper end of the recess 32. The recess 32 of the lower arm 16 is formed by deforming the metal sheet such that a central portion of the metal sheet is inwardly curved. Thus, an outer surface Sout of the sheet metal defines the recess 32.

The stabilizer bar 18 has, in its plan view, a generally U-shaped configuration, and is provided between the left and right steering wheels 10 of the vehicle. The stabilizer bar 18 includes an intermediate portion 34 extending generally parallel to a widthwise direction of the vehicle, and a left and a right arm (or wheel-side) portion 36 (only one arm portion 36 is shown in the figures) which are provided on either side of the intermediate portion 34 and extend generally parallel to a lengthwise direction of the vehicle. As shown in Fig. 2, an axis line, Ls, of the stabilizer bar 18 extends such that in the intermediate portion 34 of the bar 18, the axis line Ls extends generally parallel to the widthwise direction of the vehicle and, in each of the two arm portions 36 of the bar 18, the axis line Ls extends in a direction having a component parallel to the lengthwise direction of the vehicle. A free end portion of each of the two arm portions 36 of the stabilizer bar 18 is attached via a corresponding one of two connection portions 38 (only one connection portion 38 is shown) to a corresponding one of the two lower arms 16, such that the each arm portion 36 or the bar 18 is pivotable relative to the one lower arm 16, and is not movable in an upward or downward direction relative to the same 16. The intermediate portion 34 of the stabilizer bar 18 is supported by the body-side member 30 via two support portions 40 (only one support portion 40 is shown) each of which includes a rubber bushing, such that the intermediate portion 34 or the bar 18 is not movable in the upward or downward direction relative to the body-side member 30. Each of the two arm portions 36 extends above a corresponding one of the two lower arms 16. When the left and right lower arms 16 generally vertically move in opposite phases, respectively, relative to the body-side member 30, i.e., when the vehicle rolls, the stabilizer bar 18 is twisted while producing a restoring force corresponding to a degree or amount of twisting thereof. This restoring force restrains the rolling of the vehicle.

The two shock absorbers 20 are attached to respective upper end portions of the two steering knuckles 14. Each shock absorber 20 is provided between the corresponding steering knuckle 14 and another body-side member, not shown, of the vehicle, and functions as a link member. Two knuckle arms 15 (only one knuckle arm 15 is shown) are supported by the two steering knuckles 14, respectively, and two tie rods 46 (only one tie rod 46 is shown in the figures) are connected to the two knuckle arms 15, respectively. When the tie rods 46 are moved in the widthwise direction of the vehicle, the left and right steering wheels 10 are steered.

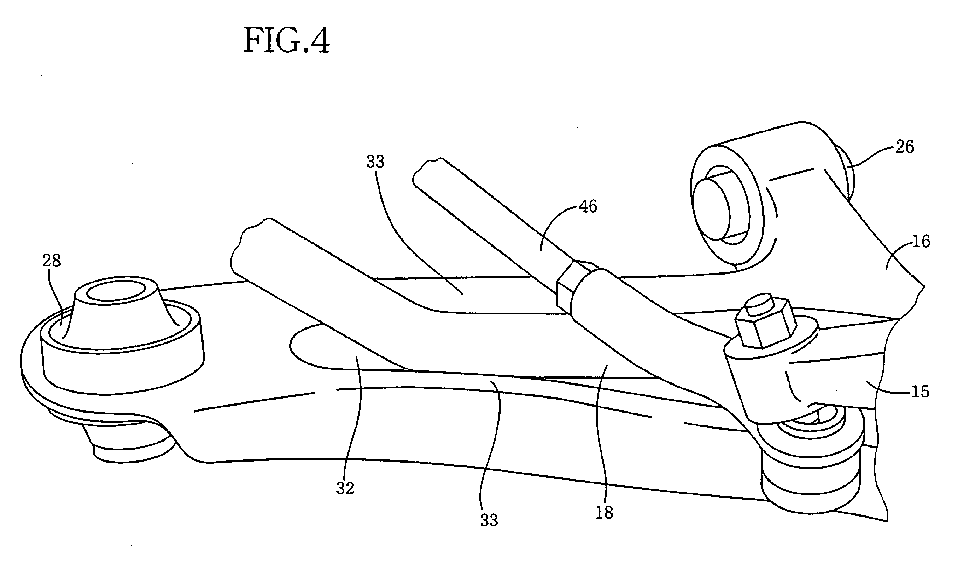

In the present embodiment, as shown in Figs. 2 through 4, the stabilizer bar 18 extends below the tie rods 46. It is preferred that the tie rods 46 be located in the vicinity of the corresponding lower arms 16, in view of adjustment of a toe angle of each steering wheel 10. Meanwhile, the two connection portions 38 with which the stabilizer bar 18 is connected to the two lower arms 16, are located at respective positions nearer to a front end of the vehicle than respective positions where the two tie rods 46 are connected to the corresponding knuckle arms 15, and the two arm portions 36 of the bar 18 extend from the two connection portions 38, respectively, toward a rear end of the vehicle. Therefore, in a three-dimensional space corresponding to a portion, R, of each lower arm 16, the stabilizer bar 18 extends across the corresponding tie rod 46 and/or a gear box 48. More specifically described, the stabilizer bar 18 extends below at least one of the corresponding tie rod 46 and the gear box 48.

In the present embodiment, as shown in Fig. 5 that is a cross-sectional view taken along a plane perpendicular to the axis line Ls of each of the two arm portions 36 of the stabilizer bar 18, the stabilizer bar 18 and the two lower arms 16 are provided such that, in a normal or neutral state of each of the two steering wheels 10, a corresponding one of the two arm (or wheel-side) portions 36 of the bar 18 is located in the recess 32 of a corresponding one of the two lower arms 16. More specifically described, in the neutral state of each steering wheel 10, a portion of a cross section of the corresponding arm portion 36 of the stabilizer bar 18 is positioned below a straight line, Lh, connecting between respective upper ends of two shoulder portions 33 of a cross section of the corresponding lower arm 16 that are located on either side of the corresponding arm portion 36 of the bar 18. The normal or neutral state means a state in which each of the two steering wheels 10 (or the two lower arms 16) takes an upward-and-downward-direction reference position relative to the body-side member 30. For example, the neutral state is a state in which the vehicle carries a standard load and is stopped, or is straightly running, on a horizontal road surface. Below the stabilizer bar 18, no vacant spaces but the lower arms (or the sheet metals) 16 are located.

As shown in Fig. 6, a relative positional relationship between the stabilizer bar 18 and each of the two lower arms 16. changes when a corresponding one of the two steering wheels 10 moves in the upward and downward directions relative to the body-side portion 30. More specifically described, the stabilizer bar 18 is pivotable about the support portions 40, whereas each lower arm 16 is pivotable about the connection portions 26, 28. Therefore, when each steering wheel 10 fully rebounds relative to the body-side member 30, that is, when each steering wheel 10 takes the lowest position relative to the body-side member 30 in the upward and downward directions, the stabilizer bar 18 takes the nearest position to the corresponding lower arm 16. However, even when each steering wheel 10 fully rebounds, the stabilizer bar 18 is kept away from the corresponding lower arm 16, i.e., the outer surface Sout defining the recess 32, and is prevented from butting the surface Sout. The stabilizer bar 18 is provided in such a state in which the bar 18 can be elastically twisted corresponding to the rolling of the vehicle and can produce a sufficiently great restoring force.

Thus, in the present suspension, the stabilizer bar 18 can enjoy a sufficiently great rolling-restraining effect, without needing to enlarge the space in which the suspension is provided. In addition, the tie rods 46 can be located at the respective height positions that are near to the corresponding lower arms 16. Moreover, since the two arm portions 36 of the stabilizer bar 18 are provided in the respective recesses 32 of the two lower arms 16, the stabilizer bar 18 can restrain deformation of at least one of the lower arms 16, for example, when the vehicle collides with another vehicle or anything else, and accordingly the bar 18 can restrain deformation of other suspension-related members and/or the steering wheels 10.

In the suspension disclosed by the previously-indicated Japanese Patent Application Publication No. 2001-171326, a space in which a portion of a stabilizer bar is located is provided in a large curved portion of a body-side member of a vehicle, or is provided by attaching two lower arms to the body-side member at respective outer positions in a widthwise direction of the vehicle. However, in the case where the body-side member has the large curved portion or portions, a strength of the body-side member lowers. In the case where the two lower arms are located at the respective outer positions in the widthwise direction of the vehicle, an overall width of the vehicle must be increased unless respective lengths of the lower arms are changed. On the other hand, if the lower arms are shortened to prevent the increasing of the width of the vehicle, a maximum rotation angle of each lower arm relative to the body-side member must be increased. In addition, the alignment of two steering wheels changes to the disadvantage of the vehicle. In contrast, in the present embodiment, the two arm portions 36 of the stabilizer bar 18 are partly accommodated by the respective recesses 32 of the two lower arms 16. Therefore, the stabilizer bar 18 can enjoy the above-described advantages, while the strength of the body-side member 30 does not lower and the alignment of the steering wheels 10 does not largely change. The respective recesses 32 of the two lower arms 16 may be either ones that are primarily used for one or more different purposes, or ones that are exclusively used for accommodating the two arm portions 36 of the stabilizer bar 18.

The illustrated suspension is arranged such that in the neutral state of each of the steering wheels 10, the corresponding one of the two arm portions 36 of the stabilizer bar 18 is accommodated by a corresponding one of the two recesses 32. However, the suspension may be modified such that in the neutral state of each steering wheel 10, the corresponding arm portion 36 of the stabilizer bar 18 is located above the straight line Lh passing through the respective upper ends of the two shoulder portions 33 of a corresponding one of the two lower arms 16, in the cross section taken along the plane perpendicular to the axis line Ls and, when the each steering wheel 10 fully rebounds, the corresponding arm portion 36 of the bar 18 is accommodated by the corresponding recess 32.

The illustrated suspension is arranged such that in the neutral state of each steering wheel 10, or when each steering wheel 10 rebounds, the corresponding arm portion 36 of the stabilizer bar 18 in the above-described cross section is accommodated by the corresponding recess 32. However, the suspension may be modified such that when each steering wheel 10 fully rebounds, the cross section of the corresponding arm portion 36 of the stabilizer bar 18 is entirely accommodated by the corresponding recess 32.

Each of the recesses 32 need not be formed in the entire upper surface of a corresponding one of the lower arms 16, so long as the each recess 32 is formed in at least the portion R where the stabilizer bar 18 extends across at least one of the corresponding tie rod 46 and the gear box 48.

In the illustrated embodiment, the present invention is applied to the strut type suspension. However, the present invention is also applicable to a double Wishborn type suspension. In the latter case, a stabilizer bar is partly accommodated by respective recesses, or respective through-holes, of two lower arms each of so-called "A" type.

The lower arms 16 produced by press working may be replaced with lower arms produced by forging.

In the illustrated embodiment, the recess 32 of each lower arm 16 is formed by inwardly curving the central portion of the metal sheet, so that the recess 32 is defined by the outer surface Sout of the metal sheet. However, in a second embodiment shown in Fig. 7, a recess 82 of each of two lower arms 80 (only one lower arm 80 is shown in this figure) is formed by outwardly curving a central portion of a metal sheet, so that the recess 82 is defined by an inner surface, Sin, of the metal sheet.

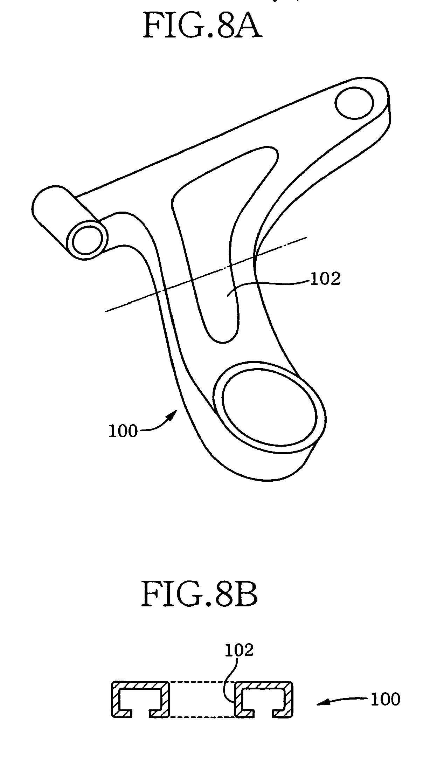

In addition, in a third embodiment shown in Fig. 8, two arm portions 36 of a stabilizer bar 18 are accommodated by respective through-holes 102 of two lower arms 100 (only one lower arm 100 is shown in this figure). In the third embodiment, no portions of the lower arms 100 (i.e., no portions of the metal sheets) are present below the two arm portions 36 of the stabilizer bar 18. In this embodiment, too, the respective through-holes 102 of the two lower arms 100 may be ones that are primarily used for one or more different purposes, e.g., for the purpose of lightening the same 100, or ones that are exclusively used for accommodating the two arm portions 36 of the stabilizer bar 18.

In the illustrated embodiment, the suspension is used with the front left and right wheels 10 of the vehicle. However, this suspension may be used with the rear left and right wheels of the vehicle. Alternatively, an additional suspension may be employed for use with the rear left and right wheels of the vehicle.

## Claims

1. A suspension for use with a vehicle having a first pair of front left wheel and front right wheel (10) and a second pair of rear left wheel and rear right wheel, the suspension including
a left lower arm and a right lower arm (16; 80; 100) corresponding to the left wheel and the right wheel of at least one pair of the first and second pairs, respectively; and
a stabilizer bar (18) which is provided between the left wheel and the right wheel,
the suspension being **characterized in that**
the left lower arm, the right lower arm (16; 80; 100), and the stabilizer bar (18) are provided such that at least when the suspension fully rebounds, at least a portion of a first cross section of each of opposite wheel-side portions (36) of the stabilizer bar that are located on respective sides of the left wheel and the right wheel (10) is positioned below a straight line (Lh) connecting between respective upper ends of two portions (33) of a second cross section of a corresponding one of the left lower arm and the right lower arm, the first and second cross sections being taken along a plane perpendicular to an axis line (Ls) of said each wheel-side portion of the stabilizer bar, said two portions of the second cross section being located on either side of at least said portion of the first cross section.

2. The suspension according to claim 1, wherein each of the left lower arm and the right lower arm (16; 80) has a recess (32; 82) opening upward, and wherein at least when the suspension fully rebounds, at least said portion of the first cross section of said each wheel-side portion (36) of the stabilizer bar (18) is positioned in the recess of said corresponding one lower arm.

3. The suspension according to claim 1, wherein each of the left lower arm and the right lower arm (100) has a through-hole (102) formed through a thickness thereof and opening upward and downward, and wherein at least when the suspension fully rebounds, at least said portion of the first cross section of said each wheel-side portion (36) of the stabilizer bar (18) is positioned in the through-hole of said corresponding one lower arm.

4. The suspension according to any of claims 1 through 3, wherein each of the left lower arm and the right lower arm (16; 80; 100) has a generally flat shape, and is produced by press working.

5. The suspension according to any of claims 1 through 4, wherein each of the left lower arm and the right lower arm (16; 18; 100) is of an L type.

6. The suspension according to any of claims 1 through 5, wherein the left lower arm, the right lower arm (16; 80; 100), and the stabilizer bar (18) are provided such that when the suspension fully rebounds, the stabilizer bar does not contact with the left lower arm and the right lower arm, and is twistable by rolling of the vehicle so as to produce a restoring force.

7. The suspension according to any of claims 1 through 6, further comprising a left shock absorber which is provided between the left wheel and a body-side member of the vehicle that is provided on a side of a body of the vehicle, and a right shock absorber (20) which is provided between the right wheel (10) and the body-side member of the vehicle, wherein the suspension is of a strut type in which each of the left shock absorber and the right shock absorber functions as a link member.

8. The suspension according to any of claims 1 through 7, wherein the left wheel and the right wheel comprise a left steering wheel and a right steering wheel (10), respectively, and the left lower arm and the right lower arm (16; 80; 100) correspond to the left steering wheel and the right steering wheel, respectively, wherein the vehicle has a left knuckle arm and a right knuckle arm (15) corresponding to the left steering wheel and the right steering wheel, respectively; a left tie rod and a right tie rod (46) which are connected to the left knuckle arm and the right knuckle arm, respectively; and a gear box (48) which is provided between the left and right tie rods, and wherein said each of the opposite wheel-side portions (36) of the stabilizer bar (18) extends below at least one of the bear box and a corresponding one of the left and right tie rods.

## Patentansprüche

1. Aufhängung zur Verwendung mit einem Fahrzeug, das ein erstes Paar aus linkem Vorderrad und rechtem Vorderrad (10) und ein zweites Paar aus linkem Hinterrad und rechtem Hinterrad hat, wobei die Aufhängung Folgendes aufweist:
einen linken unteren Arm und einen rechten unteren Arm (16; 80; 100) jeweils entsprechend zu dem linken Rad und dem rechten Rad wenigstens eines Paars von dem ersten und dem zweiten Paar; und
einen Stabilisator (18), der zwischen dem linken Rad und dem rechten Rad vorgesehen ist,
wobei die Aufhängung **dadurch gekennzeichnet ist, dass**
der linke untere Arm, der rechte untere Arm (16; 80; 100) und der Stabilisator (18) derartig vorgesehen sind, dass wenigstens dann, wenn die Aufhängung vollständig ausfedert, wenigstens ein Abschnitt eines ersten Querschnitts eines jeden von entgegengesetzten radseitigen Abschnitten (36) des Stabilisators, die sich auf jeweiligen Seiten des linken Rads und des rechten Rads (10) befinden, unterhalb einer geraden Linie (Lh) positioniert ist, die zwischen jeweiligen oberen Enden von zwei Abschnitten (33) eines zweiten Querschnitts eines entsprechenden Arms von dem linken unteren Arm und dem rechten unteren Arm verbindet, wobei der erste und der zweite Querschnitt entlang einer Ebene genommen sind, die senkrecht zu einer Achsenlinie (Ls) eines jeden radseitigen Abschnitts des Stabilisators ist, wobei sich die zwei Abschnitte des zweiten Querschnitts auf beiden Seiten des wenigstens einen Abschnitts des ersten Querschnitts befinden.

2. Aufhängung nach Anspruch 1, wobei jeder von dem linken unteren Arm und dem rechten unteren Arm (16; 80) eine Aussparung (32; 82) aufweist, die nach oben geöffnet ist, und wobei wenigstens dann, wenn die Aufhängung vollständig ausfedert, wenigstens der Abschnitt des ersten Querschnitts eines jeden radseitigen Abschnitts (36) des Stabilisators (18) in der Aussparung des entsprechenden unteren Arms positioniert ist.

3. Aufhängung nach Anspruch 1, wobei jeder von dem linken unteren Arm und dem rechten unteren Arm (100) ein Durchgangsloch (102) aufweist, das durch dessen Dicke hindurch ausgebildet ist und nach oben und nach unten offen ist, und wobei wenigstens dann, wenn die Aufhängung vollständig ausfedert, wenigstens der Abschnitt des ersten Querschnitts eines jeden radseitigen Abschnitts (36) des Stabilisators (18) in dem Durchgangsloch des entsprechenden unteren Arms positioniert ist.

4. Aufhängung nach einem der Ansprüche 1 bis 3, wobei jeder von dem linken unteren Arm und dem rechten unteren Arm (16; 80; 100) eine generell flache Gestalt aufweist und durch eine Pressbearbeitung hergestellt ist.

5. Aufhängung nach einem der Ansprüche 1 bis 4, wobei jeder von dem linken unteren Arm und dem rechten unteren Arm (16; 80; 100) L-artig ist.

6. Aufhängung nach einem der Ansprüche 1 bis 5, wobei der linke untere Arm, der rechte untere Arm (16; 80; 100) und der Stabilisator (18) derart vorgesehen sind, dass dann, wenn die Aufhängung vollständig ausfedert, der Stabilisator nicht mit dem linken unteren Arm und dem rechten unteren Arm in Kontakt tritt, und durch ein Rollen des Fahrzeugs verdrehbar ist, so dass eine Wiederherstellungskraft erzeugt wird.

7. Aufhängung nach einem der Ansprüche 1 bis 6, die des Weiteren einen linken Stoßdämpfer, der zwischen dem linken Rad und einem körperseitigen Bauteil des Fahrzeugs vorgesehen ist, der auf einer Fahrzeugkörperseite vorgesehen ist, und einen rechten Stoßdämpfer (20) aufweist, der zwischen dem rechten Rad (10) und dem körperseitigen Bauteil des Fahrzeugs vorgesehen ist,
wobei die Aufhängung eine Federbeinaufhängung ist, in der jeder von dem linken Stoßdämpfer und dem rechten Stoßdämpfer als ein Verbindungsbauteil wirkt.

8. Aufhängung nach einem der Ansprüche 1 bis 7, wobei das linke Rad und das rechte Rad jeweils ein linkes Lenkrad und ein rechtes Lenkrad (10) aufweisen, und der linke untere Arm und der rechte untere Arm (16; 80; 100) jeweils zu dem linken Lenkrad und dem rechten Lenkrad korrespondieren, wobei das Fahrzeug Folgendes aufweist:
einen linken Gelenkarm und einen rechten Gelenkarm (15), die jeweils zu dem linken Lenkrad und dem rechten Lenkrad korrespondieren;
eine linke Spurstange und eine rechte Spurstange (46), die jeweils mit dem linken Gelenkarm und dem rechten Gelenkarm verbunden sind; und
einen Getriebekasten (48), der zwischen der linken und der rechten Zugstange vorgesehen ist, und wobei sich jeder von den entgegengesetzten radseitigen Abschnitten (36) des Stabilisators (18) unter wenigstens einem von dem Radkasten und einer entsprechenden von der linken und der rechten Zugstange erstreckt.

## Revendications

1. Suspension pour usage dans un véhicule ayant une première paire de roue avant gauche et de roue avant droite (10) et une deuxième paire de roue arrière gauche et de roue arrière droite, la suspension incluant
un bras inférieur gauche et un bras inférieur droite (16; 80; 100) correspondant à la roue gauche et à la roue droite d'au moins une paire des première et deuxième paires, respectivement; et
une barre stabilisatrice (18) qui est pourvue entre la roue gauche et la roue droite,
la suspension étant **caractérisée en ce que**
le bras inférieur gauche, le bras inférieur droite (16; 80; 100), et la barre stabilisatrice (18) sont pourvus de telle sorte qu'au moins lorsque la suspension rebondit totalement, au moins une portion d'une première section transversale de chacune de portions opposées côté roues (36) de la barre stabilisatrice qui sont situées sur des côtés respectifs de la roue gauche et de la roue droite (10) soit positionnée en dessous d'une ligne droite (Lh) reliant des extrémités supérieures respectives de deux portions (33) d'une deuxième section transversale de l'un correspondant du bras inférieur gauche et du bras inférieur droite, les première et deuxième sections transversales étant prises le long d'un plan perpendiculaire à une ligne axiale (Ls) de ladite chaque portion côté roues de la barre stabilisatrice, lesdites deux portions de la deuxième section transversale étant situées sur l'un ou l'autre côté d'au moins ladite portion de la première section transversale.

2. Suspension selon la revendication 1, dans laquelle chacun du bras inférieur gauche et du bras inférieur droite (16; 80) a un évidement (32; 82) s'ouvrant vers le haut, et où au moins lorsque la suspension rebondit totalement, au moins ladite portion de la première section transversale de ladite chaque portion côté roues (36) de la barre stabilisatrice (18) est positionnée dans l'évidement dudit bras inférieur correspondant.

3. Suspension selon la revendication 1, dans laquelle chacun du bras inférieur gauche et du bras inférieur droite (100) a un trou traversant (102) formé à travers une épaisseur correspondante et s'ouvrant vers le haut et vers le bas, et où au moins lorsque la suspension rebondit totalement, au moins ladite portion de la première section transversale de ladite chaque portion côté roues (36) de la barre stabilisatrice (18) est positionnée dans le trou traversant dudit bras inférieur correspondant.

4. Suspension selon l'une quelconque des revendications 1 à 3, dans laquelle chacun du bras inférieur gauche et du bras inférieur droite (16; 80; 100) a une forme généralement plate, et est produit par un travail à la presse.

5. Suspension selon l'une quelconque des revendications 1 à 4, dans laquelle chacun du bras inférieur gauche et du bras inférieur droite (16; 18; 100) est d'un type en L.

6. Suspension selon l'une quelconque des revendications 1 à 5, dans laquelle le bras inférieur gauche, le bras inférieur droite (16; 80; 100), et la barre stabilisatrice (18) sont pourvus de telle sorte que lorsque la suspension rebondit totalement, la barre stabilisatrice n'entre pas en contact avec le bras inférieur gauche et le bras inférieur droite, et peut être tordue par une marche du véhicule de manière à produire une force de rappel.

7. Suspension selon l'une quelconque des revendications 1 à 6, comprenant en plus un amortisseur de chocs gauche qui est pourvu entre la roue gauche et un organe côté corps du véhicule qui est pourvu sur un côté d'un corps du véhicule, et un amortisseur de chocs droite (20) qui est pourvu entre la roue droite (10) et l'organe côté corps du véhicule, où la suspension est du type à jambe de force où chacun de l'amortisseur de chocs gauche et de l'amortisseur de chocs droite fonctionne comme un organe de liaison.

8. Suspension selon l'une quelconque des revendications 1 à 7, dans laquelle la roue gauche et la roue droite comprennent une roue de direction gauche et une roue de direction droite (10), respectivement, et le bras inférieur gauche et le bras inférieur droite (16; 80; 100) correspondent à la roue de direction gauche et à la roue de direction droite, respectivement, où le véhicule a un levier de fusée gauche et un levier de fusée droite (15) correspondant à la roue de direction gauche et à la roue de direction droite, respectivement; une biellette de direction gauche et une biellette de direction droite (46) qui sont reliées au levier de fusée gauche et au levier de fusée droite, respectivement; et une boîte à engrenage (48) qui est pourvue entre les biellettes de direction gauche et droite, et où ladite chacune des portions opposées côté roues (36) de la barre stabilisatrice (18) s'étend en dessous d'au moins l'une de la boîte à engrenage et de l'une correspondante des biellettes de direction gauche et droite.
